# EUROPEAN PATENT SPECIFICATION

(11) **EP 2 252 789 B1**
(45) Date of publication and mention of the grant of the patent: **18.01.2012**
(21) Application number: 09710223.0
(22) Date of filing: 11.02.2009
(51) Int. Cl.: F03B 17/06

(54) **STREAM ENERGY EXTRACTION DEVICE**
VORRICHTUNG ZUR ENERGIEGEWINNUNG AUS EINEM STROM
DISPOSITIF D'EXTRACTION D'ENERGIE DE COURANT

(30) Priority: 14.02.2008 NO 20080805
(43) Date of publication of application: 24.11.2010
(73) Proprietor: Børgesen, Are, 5538 Haugesund (NO)
(72) Inventor: Børgesen, Are, 5538 Haugesund (NO)
(74) Representative: Håmsø Patentbyrå ANS
(86) International application number: PCT/NO2009/000051
(87) International publication number: WO 2009/102217

(56) References cited:
- WO-A1-2007/068157
- DE-U1-202007 002 848
- GB-A- 1 563 114
- GB-A- 2 131 490

## Description

This invention relates to a stream energy extraction device. More particularly, it relates to a stream energy extraction device including at least an endless rope running around sheaves, there being connected, along the rope, submerged sail- or vane-like elements. The flowing water causes the sail- or vane-like elements to be moved in the water, whereby at least a portion of the stream energy in the water is transmitted to the rope, the rope running, where at least a component of the moving direction of the rope is upstream, in a channel.

By a rope is meant, in this connection, any form of elongated flexible element such as a fibre rope, wire or chain.

The prior art in the field of stream energy extraction devices includes ropes running around at least two sheaves, there being sail- or vane-like elements connected along the rope. Along one portion of its longitudinal extent, the rope extends at one angle relative to the direction of flow, and in another portion of its longitudinal extent, at a different angle relative to the direction of flow.

The operation of stream energy extraction devices working according to this principle is conditional on the rope having to be moved, in a portion of its longitudinal extent, in a direction in which one component of the moving direction is upstream. It is usual for the sail- or vane-like elements to be brought, during this part of the movement, to take a position in which the flow resistance in the water is substantially reduced.

The GB document 2131490 deals with a device of this kind, in which vanes are folded in to reduce the viscous forces acting on the vanes along the return path.

Even if the sail- or vane-like elements are brought, during the upstream movement, to take such a position, the rope and elements are subjected, during the upstream movement, to viscous forces which cause the power output of the stream energy extraction device to be reduced to a considerable extent. GB-document 1563114 discloses a power apparatus for use underwater and comprising a plurality of sails or blades for harenessing the flow of the stream, means for carrying said sails or blades in a circuit and being connectable to drive a device, said circuit including a power leg and a return leg. Both the power leg and the return leg are positioned inside a housing. The housing has doors for admitting water flow to the power leg. The document does not mention any features for altering the flow along the return leg. The invention has for its object to remedy or reduce at least one of the drawbacks of the prior art.

The object is achieved according to the invention through the features which are specified in the description below and in the claims that follow.

A stream energy extraction device in accordance with the invention includes endless ropes running around sheaves, there being connected, along at least one rope, submerged sail- or vane-like elements. The flowing water causes the sail- or vane-like elements to be moved in the water, whereby at least a portion of the stream energy in the water is transmitted to the rope, the rope running, where at least a component of the moving direction of the rope is upstream, in a channel.

The channel can be completely or partially closed and form a shielding against the flowing water. Besides, the channel may be provided with covers or closing mechanisms which are arranged to reduce or stop the flow of water in the direction of flow of the surrounding water, possibly guide vanes or pipes which bring the water in the channel to flow in the same direction as the rope.

The water flow in the channel may be upstream, or at least take a lower downstream speed, relative to the surrounding water flow.

It is the most advantageous for the flow rate and direction in the channel to be approximately equal to the moving speed and direction of the rope, and a pump may supply the channel with water, whereby the flow rate in the channel is controlled by means of the pump.

With advantage, the pump is driven by the water flow at the channel.

The invention contributes to the output power from a stream energy extraction device of this kind being increased to a considerable extent. The invention thereby provides for practical utilization of flowing water for energy production, also in regions where there are an insignificant head and a relatively slow flow of water.

In what follows is described a non-limiting example of a preferred embodiment which is visualized in the accompanying drawing, in which:

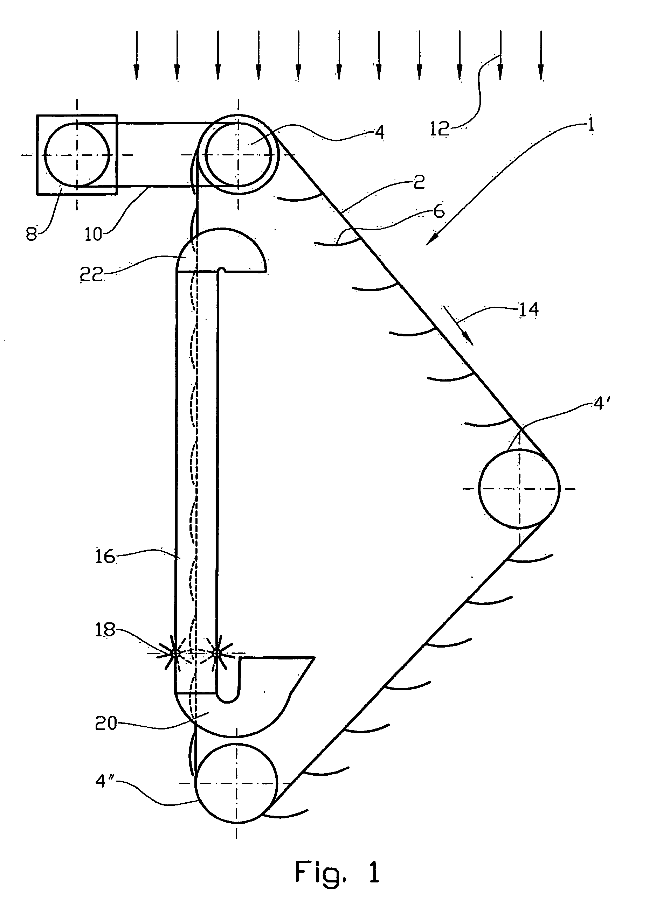

Figure 1 shows schematically a stream energy extraction device according to the invention.

In the drawing, the reference numeral 1 indicates a stream energy extraction device including a rope 2 running around sheaves 4, 4' and 4", a number of spaced sail-like elements 6 being connected to the rope 2.

A pump or generator 8 is connected to the sheave 4 by means of a driving element 10 to extract energy from the stream energy extraction device 1.

In figure 1 the general direction of flow of the water is indicated by the arrows 12, whereas the moving direction of the rope is indicated by the arrow 14.

Between the sheave 4 and the sheave 4" the rope 2 is moved in one direction relative to the direction of flow 12. In a manner known per se, the sail-like elements 6 take a favourable relative position relative to the direction of flow 12 to pick up stream energy from the water.

By means of control organs, not shown, the sail-like elements 6 are flipped over at the sheave 4', taking, while being moved between the sheaves 4' and 4", a second favourable relative position relative to the direction of flow 12.

Between the sheaves 4" and 4, the rope 2 is moved in an upstream direction. The sail-like elements 6 here take a position in which they are braked to the least extent possible by the water flow.

A closed channel 16 encloses the rope 2 and the sail-like elements 6 at least over a portion of the space between the sheaves 4" and 4.

In this preferred exemplary embodiment, there is arranged a pump, indicated by the paddle wheels 18 in figure 1, which is arranged to pump water in an upstream direction through the channel 16. The pump 18 is driven by the flowing water along the channel 16 and can be constituted by a mechanical or flow-technical device according to the prior art known per se.

The channel 16 is provided with an inflow conductor pipe 20 and an outflow conductor pipe 22 which are both arranged to contribute to an improved flow in the channel 16.

By the fact that the water is flowing in the same direction as the rope 2 while the rope 2 and the sail-like elements 6 connected to it are moved in the upstream direction to the direction of flow 12, the energy loss connected to the upstream movement of the rope 2 and sail-like elements 6 is substantially eliminated.

## Claims

1. A stream energy extraction device (1) including endless ropes (2) running around sheaves (4, 4', 4"), there being connected, along at least one rope (2), submerged sail- or vane-like elements (6), flowing water causing the sail- or vane-like elements (6) to be moved in the water, whereby at least a portion of the stream energy of the water is transmitted to the rope (2), and a channel (16), and wherein at least a component of the moving direction of the rope (2) is upstream, the rope (2) is running in the channel (16), **characterized in that**, where at least a component of the moving direction of the rope (2) is downstream, the rope (2) is running outside the channel (16), and **in that** the channel (16) at least at an end party where the rope (2) enters the channel (16) from the outside, is provided with an inflow conductor pipe(20) that have its external opening facing upstream, or at an end party where the rope (2) exits the channel (16) to the outside is provided with an outflow conductor pipe (22) that have its external opening facing downstream, whereby the water flow in the channel (16) is upstream or has a lower downstream speed than the surrounding water flow.

2. The device in accordance with claim 1, **characterized in that** the flow rate and direction in the channel are controlled by means of a pump (18).

3. The device in accordance with claim 2, **characterized in that** the pump (18) is driven by the water flow at the channel (16).

## Patentansprüche

1. Vorrichtung zur Energiegewinnung aus einem Strom (1) umfasst Endlosseile (2), die um Seilrollen (4, 4', 4") laufen, an denen, entlang mindestens eines Seils (2), eingetauchte seil- oder schaufelartige Elemente (6) verbunden sind, wobei fliessendes Wasser bewirkt, dass die seil- oder schaufelartigen Elemente (6) im Wasser bewegt werden, wobei mindestens ein Teil der Stromenergie des Wassers auf das Seil (2) und auf einen Kanal (16) übertragen wird, und worin mindestens eine Komponente der Bewegungsrichtung des Seils (2) stromaufwärts ist, das Seil (2) in dem Kanal (16) läuft, **dadurch gekennzeichnet, dass**, wo mindestens eine Komponente der Bewegungsrichtung des Seils (2) stromabwärts ist, das Seil (2) ausserhalb des Kanals (16) verläuft, und dass der Kanal (16) an mindestens einem Endstück, wo das Seil (2) in den Kanal (16) von aussen eindringt, mit einem Einströmungsrohr (20) ausgestattet ist, dessen externe Öffnung stromaufwärts gerichtet ist, oder an einem Endstück, wo das Rohr (2) den Kanal (16) nach aussen verlässt, mit einem Ausströmungsrohr (22) ausgestaltet ist, dessen äussere Öffnung stromabwärts gerichtet ist, wobei der Wasserfluss im Kanal (16) stromaufwärts ist oder stromabwärts eine langsamere Geschwindigkeit als der umgebende Wasserfluss hat.

2. Vorrichtung gemäss Anspruch 1, **dadurch gekennzeichnet, dass** die Flussrate und -richtung im Kanal mittels einer Pumpe (18) kontrollierbar ist.

3. Vorrichtung gemäss Anspruch 2, **dadurch gekennzeichnet, dass** die Pumpe (18) durch den Wasserfluss im Kanal (16) antreibbar ist.

## Revendications

1. Dispositif d'extraction d'énergie de courant (1) comprenant des cordes sans fin (2), qui circulent autour des poulies (4, 4', 4"), auxquelles sont connectées au moins le long d'une corde (2) des éléments submergés de type voile ou pale (6), où l'eau courante occasionne que les éléments de type voile ou pale (6) se déplacent dans l'eau, où au moins une partie de l'énergie de courant de l'eau est transmise sur la corde (2) et un canal (16), et où au moins une composante de la direction de déplacement de la corde (2) est en amont, où la corde (2) passe dans le canal (16), **caractérisé en ce que**, où au moins une composante de la direction de déplacement de la corde (2) est en aval, la corde (2) passe en dehors du canal (16), et **en ce que** le canal (16) est équipé, au moins sur un bout, où la corde (2) entre dans le canal (16) de l'extérieur, avec un tube de circulation d'afflux (20) qui a son ouverture externe dirigée vers l'amont, ou sur un bout, où la corde (2) sort du canal (16) vers l'extérieur, est équipé avec un tube de circulation de sortie (22) qui a son ouverture externe dirigée vers l'aval, où le débit d'eau dans le canal (16) est en amont ou a une vitesse en aval plus petite que la vitesse de débit d'eau environnant.

2. Dispositif selon la revendication 1, **caractérisé en ce que** le débit et la direction dans le canal sont contrôlés par le biais d'une pompe (18).

3. Dispositif selon la revendication 2, **caractérisé en ce que** la pompe (18) est entraînée par le débit d'eau dans le canal (16).
